## Europäisches Patentamt

## European Patent Office

## Office européen des brevets

(11) Veröffentlichungsnummer: **0 090 085**
**B1**

(12) # EUROPÄISCHE PATENTSCHRIFT

(45) Veröffentlichungstag der Patentschrift:
**08.04.87**

(51) Int. Cl.⁴: **H 04 N 3/18,** H 02 M 7/12

(21) Anmeldenummer: **82111164.8**

(22) Anmeldetag: **02.12.82**

(54) **Synchronisiertes Schaltnetzteil mit netzgetrennter Horizontal-Endstufenschaltung in Fernsehempfängern.**

(30) Priorität: **25.03.82 DE 3210908**

(43) Veröffentlichungstag der Anmeldung:
**05.10.83 Patentblatt 83/40**

(45) Bekanntmachung des Hinweises auf die Patenterteilung:
**08.04.87 Patentblatt 87/15**

(84) Benannte Vertragsstaaten:
**AT BE CH DE FR GB IT LI**

(56) Entgegenhaltungen:
**DE-A-2 835 946**
**DE-A-3 107 009**
**FR-A-2 382 812**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Zipser, Otfried, Schafhofstrasse 23, D-8501 Cadolzburg (DE)**

LIBER, STOCKHOLM 1987

EP 0 090 085 B1

## Beschreibung

Die Erfindung betrifft ein synchronisiertes Schaltnetzteil mit netzgetrennter Horizontal-Endstufenschaltung in Fernsehempfängern mit den im Oberbegriff des Anspruchs 1 angegebenen Merkmalen.

Es ist bekannt, daß in der Fernsehempfänger-Bildröhre das zur Ablenkung des Elektronenstrahls erforderliche Magnetfeld mit Hilfe einer im Bildröhrenhals angeordneten Ablenkspule erzeugt wird, durch die ein Sägezahnstrom hindurchgeschickt wird. Hierbei bildet der eine flachere Teil der Zacke den Zeilenhinlauf und der steilere Teil den Zeilenrücklauf. Da die Ablenkspule durch den Wicklungswiderstand bedingt einen Teil der Ablenkleistung in Wärme umwandelt, muß dieser Teil, um einen stabilen Betrieb sicherzustellen, in jeder Periode durch eine dem Kreis zugeführte Zusatzenergie kompensiert werden. Die von der Zeilenendstufe zur Aufrechterhaltung des Betriebs benötigte Zusatzenergie kann z.B. über ein synchronisiertes Schaltnetzteil erfolgen. Dabei kann, da mit hoher Frequenz gearbeitet wird, ein kleiner Transformator verwendet werden. In diesem Transformator kann die Trennung zwischen Gerät und Netz erfolgen. Als Schalter kommt ein Transistor oder Thyristor in Frage. Es ist ferner ein Schalttransformator bekannt, bei dem eine im Regelkreis liegende Primärwicklung so an eine Sekundärwicklung angekoppelt ist, daß während der Zeilenrücklaufzeit im Regelschaltkreis der Kollektorstrom vermindert und nahezu verlustfrei abgeschaltet wird. Bei einer Schaltung dieser Art ist der Regelschaltkreis und die Horizontal-Ansteuerung auf der Sekundärseite des Stromkreises (Chassisseite) angeordnet und wird über einen eigenen Netztransformator versorgt. Der Regelschalter hingegen liegt im Primärstromkreis auf der Netzseite und wird über einen Treibertrafo angesteuert. Unter Einbeziehung der Impuls- bzw. Hochspannungserzeugung hat die geschilderte Schaltung den Nachteil, daß sie für den Anlauf einen großen Schaltungsaufwand benötigt, da allein bis drei galvanische Trennstellen erforderlich sind.

Ferner ist aus der französischen Patentanmeldung FR-A1-23 82 812, die der DE-A1-28 07 219 entspricht, ein freischwingendes Schaltnetzteil bekannt, das zur galvanischen Trennung zwischen Netz- und Chassisseite nur einen Transformator benötigt. Die bekannte Schaltung wird von einer ungeregelten Gleichspannung versorgt und besitzt einen netzseitigen Regelkreis zur Steuerung der Leitzeit eines Regelschalters in Abhängigkeit von Spannungsschwankungen in der Primärwicklung. Bei der bekannten Schaltung ist eine erste chassisseitige Wicklung vorgesehen, über die die Energie für die Horizontalendstufe gewonnen wird. Über eine zweite netzseitige Wicklung wird die Regelinformation zur Regelung der Leitzeit des Regelschalters gewonnen. Diese Regelung der Leitzeit erfolgt durch eine Veränderung der Wiederholungsfrequenz eines Generators 23. Weiterhin hat die bekannte Schaltung zweite chassisseitige, d. h. galvanisch nicht mit der Netzseite verbundene Wicklungen zur Gewinnung der Heizspannung und der Speisespannungen für die ZF-, die Chrominanz-, die videofrequenten und die vertikalfrequenten Schaltungen des Fernsehempfängers. Ferner weist die bekannte Schaltung chassisseitige Wicklungen zur Gewinnung der Gitter- und der Hochspannung auf. Schließlich enthält die bekannte Schaltung einen parallel zur Primärwicklung des Transformators angeordneten Kondensator zur Herabsetzung der Eigenschwingungsfrequenz der Primärwicklung und ein Tor, welches verhindert, daß der Regelschalter vor dem Ende der nach seiner Sperrung auftretenden Schwingung der Primärwicklung des Transformators leitend wird. Über die Kopplungsverhältnisse zwischen den einzelnen Wicklungen ist nichts ausgesagt.

Aus der DE-A1-28 35 946 ist eine Schaltung der Zeilenablenkstufe im Fernsehempfänger bekannt, die ebenso wie der Anmeldungsgegenstand zur Netztrennung und für die Erzeugung der Hochspannung nur einen einzigen Transformator benötigt. Auf der Primärseite der bekannten Schaltung sind neben der Primärwicklung 1 des Transformators noch weitere Wicklungen 3, 4 zur Nachregelung der Leitzeit eines Schalttransistors 8 über einen Oszillator 7 vorgesehen. Die genannten Primärwicklungen sind fest aneinandergekoppelt. Auf der Sekundärseite wird über eine Wicklung 5 Energie für die Horizontal-Endstufe gewonnen. Weiterhin sind auf der Sekundärseite u.a. eine Ablenkspule 16, ein Hinlaufschalter 11 und ein Horizontaloszillator 10 vorgesehen, dem seine Betriebsspannung über eine fest an die Wicklung 5 gekoppelte Wicklung 6 zugeführt wird. Die primärseitigen Wicklungen sind lose an die sekundärseitigen Wicklungen gekoppelt. Bei der bekannten Schaltung wirken sich Belastungsänderungen an der Wicklung 6 aufgrund der festen Kopplung der Wicklung 6 an die Wicklung 5 auf die Horizontalablenkung aus.

Demgegenüber liegt der Erfindung die Aufgabe zugrunde, eine Schaltungsanordnung für ein synchronisiertes Schaltnetzteil mit netzgetrennter Horizontal-Endstufe der im Oberbegriff des Anspruchs 1 angegebenen Art derart weiterzubilden, daß die Horizontal-Endstufe auch bei großer Leistungsentnahme unabhängig von Lastschwankungen in der aus dem selben Schaltnetzteil gespeisten NF-Stufe ist.

Diese Aufgabe wird durch die Kombination der im kennzeichnenden Teil des Anspruchs 1 angegebenen Merkmale gelöst. Vorteilhafte Weiterbildungen ergeben sich aus den Ansprüchen 2 bis 4.

Im folgenden wird ein Ausführungsbeispiel anhand eines Schaltbildes näher erläutert. Die Schaltung wird über die Netzspannung $U_N$ mit nachgeschalteter Gleichrichterbrücke von einer ungeregelten Gleichspannung versorgt und ist über nur einen Transformator 1 vom Netz getrennt, wobei der Transformator die Stromversorgung für das synchronisierte Schaltnetzteil sowie die Impuls- bzw. Hochspannungserzeugung übernimmt.

Eine Startschaltung 7, die strichpunktiert umrahmt in das Schaltbild eingezeichnet ist, liefert die für den Regelkreis benötigte Anlaufspannung an einen Kondensator 11. Der netzseitig angeordnete, etwa mit Zeilenfrequenz frei anlaufende Regelkreis 2 tastet den Regelschalter 3 auf. Über den Regelschalter liegt somit ungeregelte Gleichspannung an der Primärwicklung $n_1$ des Transformators 1. Die lose angekoppelte Sekundärwicklung $n_2$ erzeugt nach Gleichrichtung mittels einer Diode 8 an dem Kondensator 9 die benötigte Betriebsspannung für den Ablenkkreis. Durch die zweite, fest an die Primärwicklung $n_1$ angekoppelte Sekundärwicklung $n_3$ wird die Niedervoltspannung für den Horizontaloszillator 13, die NF-Stufen und die Kleinsignalstufen erzeugt und führt somit über den Hinlaufschalter 4 zum Anlauf der Horizontal-Ablenkschaltung 14, die strichpunktiert umrahmt in das Schaltbild eingezeichnet ist. Die Wicklung $n_5$, die fest mit der Wicklung $n_1$ verkoppelt ist, liefert über eine Diode 10 eine höhere Spannung an den Kondensator 11 und übernimmt in der weiteren Folge die Versorgung der Regelschaltung.

Über die Trennstelle $n_1/n_2$ wird ferner die an der Ablenkwicklung $n_2$ stehende Spannung während des Rücklaufintervalls invertiert auf die Primärwicklung $n_1$ übertragen, um den Strom im Hauptstromweg während der Rücklaufzeit zur Ausschaltung des Regelschalters 3 zu vermindern, d. h. daß der Strom auf Null gebracht wird. Der über den Referenzwiderstand 6 fließende Kollektorstrom wird als Überlast-Referenzstrom zum Abschalten des Regelschalters 3 benötigt und ausgewertet. Aus einer fest an die Wicklung $n_2$ angekoppelten Wicklung $n_4$ des Transformators 1 wird eine Rücklaufspannung gewonnen, die abhängig von der Belastung der Wicklung $n_2$ ist, wie sie sich durch Strahlstromänderungen in der Hochspannungserzeugung über die Wicklung $n_6$ und der Hochspannungskaskade 12 ergibt und die die Energie in dem Kondensator 9 über den Regelkreis 2 und somit über die Stromflußzeit im Hauptstromkreis nachregelt. Hingegen werden Belastungsänderungen in der Wicklung $n_3$, wie sie z. B. durch NF-Laständerungen gegeben sind, fast nicht nachgeregelt, da die Wicklung $n_3$ nur lose mit der Wicklung $n_2$ bzw. $n_4$ verkoppelt ist. Durch die feste Kopplung der Wicklung $n_3$ mit der Wicklung $n_1$ wird in Rücklaufgleichrichtung eine gegenüber der Netzspannungsänderung konstante Spannung erzeugt. Somit ist die Zeilenablenkschaltung 14 weitgehend unabhängig von mittleren Laständerungen in der Sekundärwicklung $n_3$. Die Spannung an der

Wicklung $n_4$, die zur Synchronisation des Regelkreises 2 und zur Nachregelung der Leitzeit des Regelschalters 3 herangezogen wird, kann alternativ zu der am Referenzwiderstand 6 gewonnenen Spannung ebenfalls als Kriterium für einen Überspannungsschutz eingesetzt werden.

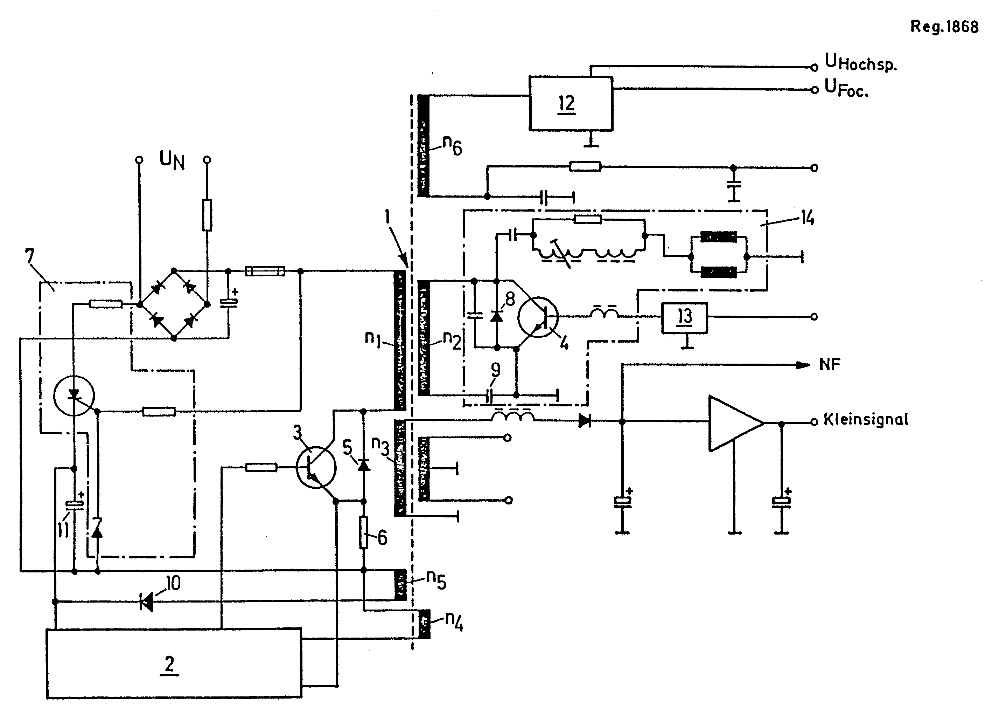

**Patentansprüche**

1. Synchronisiertes Schaltnetzteil mit netzgetrennter Horizontal-Endstufenschaltung in Fernsehempfängern zur Erzeugung eines Sägezahnstromes, wobei zur galvanischen Trennung zwischen Netz- und Chassisseite nur ein Transformator vorgesehen ist und das Schaltnetzteil von einer ungeregelten Gleichspannung versorgt wird, mit einem netzseitigen, frei anlaufenden Regelkreis zur Steuerung des Hauptstromweges, mit einem Regelschalter, über den die ungeregelte Gleichspannung die Primärwicklung $n_1$ des Transformators speist, mit einer ersten chassisseitigen Wicklung $n_2$, über die während des Rücklaufintervalles Energie für die Horizontal-Endstufenschaltung zurückgewonnen wird, wobei diese erste chassisseitige Wicklung $n_2$ lose an die Primärwicklung $n_1$ gekoppelt und galvanisch von der Netzseite getrennt ist, mit einer Wicklung $n_4$, über die die Regelinformation zur Nachregelung der Leitzeit des Regelschalters gewonnen wird, und mit einer Wicklung $n_3$, über die Niedervoltspannungen für die NF-Stufen, den Horizontaloszillator und die Kleinsignalstufen gewonnen werden, gekennzeichnet durch die Kombination der beiden folgenden Merkmale:
a) die Wicklung $n_4$, über die zudem die Synchronisation des Regelkreises (2) erfolgt, ist fest an die erste chassisseitige Wicklung $n_2$ gekoppelt;
b) die Wicklung $n_3$ ist fest an die Primärwicklung $n_1$ und lose an die erste chassisseitige Wicklung $n_2$ gekoppelt.

2. Synchronisiertes Schaltnetzteil mit netzgetrennter Horizontal-Endstufenschaltung in Fernsehempfängern zur Erzeugung eines Sägezahnstroms nach Anspruch 1, dadurch gekennzeichnet, daß die Versorgung des Regelkreises (2) in der Anlaufphase über eine Startschaltung (7) und im eingeschwungenen Zustand über eine Wicklung $n_5$ erfolgt, die fest an die Primärwicklung $n_1$ gekoppelt und galvanisch mit der Netzseite verbunden ist.

3. Synchronisiertes Schaltnetzteil mit netzgetrennter Horizontal-Endstufenschaltung in Fernsehempfängern zur Erzeugung eines Sägezahnstroms nach Anspruch 1 oder 2, dadurch gekennzeichnet, daß in Serie zum Regelschalter (3) und zur Primärwicklung $n_1$ ein Referenzwiderstand (6) liegt und die Spannung, die an diesem Referenzwiderstand (6) abfällt, dem Regelkreis (2) zugeführt wird.

4. Synchronisiertes Schaltnetzteil mit netzgegrennter Horizontal-Endstufenschaltung in Fernsehempfängern zur Erzeugung eines Sägezahnstroms nach einem oder mehreren der vorhergehenden Ansprüche, dadurch gekennzeichnet, daß eine weitere Wicklung $n_6$ vorgesehen ist, uber die die Hochspannung für die Bildröhre gewonnen wird und die galvanisch von der Netzseite getrennt ist.

### Claims

1. Synchronised switched-mode power supply with a mains isolated horizontal output circuit in television receivers for generating a sawtooth current, only one transformer being provided for electric isolation between mains and chassis side and the switched-modo power supply being supplied with an unregulated direct voltage, including a mains-side freely starting regulating loop for controlling the main current path, a regulating switch via which the unregulated direct voltage feeds the primary winding $n_1$ of the transformer, a first chassis-side winding $n_2$ via which energy is recovered for the horizontal output circuit during the retrace interval, this first chassis-side winding $n_2$ being loosely coupled to the primary winding $n_1$ and being electrically isolated from the mains side, a winding $n_4$ via which the regulating information is obtained for correcting the lead time of the regulating switch, and a winding $n_3$ via which low-voltage voltages are obtained for the low-frequency stages, the horizontal oscillator and the small-signal stages, characterised by a combination of the two following features:
a) the winding $n_4$, via which, in addition, the regulating loop (2) is synchronised, is tightly coupled to the first chassis-side winding $n_2$;
b) the winding $n_3$ is tightly coupled to the primary winding $n_1$ and loosely coupled to the first chassis side winding $n_2$.

2. Synchronised switched-mode power supply with a mains-isolated horizontal output circuit in television receivers for generating a sawtooth current according to Claim 1, characterized in that the regulating loop (2) is supplied in the start-up phase via a start circuit (7) and in the settled state via a winding $n_5$ which is tightly coupled to the primary winding $n_1$ and is electrically connected to the mains side.

3. Synchronised switched-mode power supply with a mains-isolated horizontal output circuit in television receivers for generating a sawtooth current according to Claim 1 or 2, characterized in that a reference resistance (6) is located in series with the regulating switch (3) and with the primary winding $n_1$ and the voltage dropped across this reference resistance (6) is supplied to the regulating loop (2).

4. Synchronised switched-mode power supply with a mains-isolated horizontal output circuit in television receivers for generating a sawtooth current according to one or more of the preceding claims, characterized in that a further winding $n_6$ is provided, via which the high tension for the picture tube is obtained and which is electrically isolated from the mains side.

### Revendications

1. Elément de réseau de commutation synchronisé comportant un circuit formant étage final horizontal, séparé du réseau, dans des récepteurs de télévision pour la production d'un courant en dents de scie et dans lequel il est prévu un seul transformateur pour la séparation galvanique entre le côté réseau et le côté châssis, et l'élément de réseau de commutation est alimenté par une tension continue non réglée, un circuit de réglage situé côté réseau et démarrant librement pour la commande de la voie de courant principale, un interrupteur de réglage, au moyen duquel la tension continue non réglée alimente l'enroulement primaire $n_1$ du transformateur, un premier enroulement $n_2$ situé côté châssis et au moyen duquel une énergie est récupérée pour le circuit formant étage final de balayage horizontal, pendant l'intervalle de retour et qui est accouplé de façon lâche à l'enroulement primaire $n_1$ et est séparé galvaniquement du côté réseau, un enroulement $n_4$, au moyen duquel l'information de réglage est obtenue pour le réglage d'asservissement de la durée de conduction de l'interrupteur de réglage, et un enroulement $n_3$ aux bornes duquel des tensions de faible valeur sont obtenues pour les étages à basse fréquence, l'oscillateur de balayage horizontal et les étages délivrant des petits signaux, caractérisé par la combinaison des deux caractéristiques suivantes:
a) l'enroulement $n_4$, par l'intermédiaire duquel s'effectue en outre la synchronisation du circuit de réglage (2) est couplé selon un couplage serré au premier enroulement $n_2$ situé côté châssis;
b) l'enroulement $n_3$ est couplé selon un couplage serré à l'enroulement primaire $n_1$ et selon un couplage lâche au premier enroulement $n_2$ situé côté châssis.

2. Elément de réseau de commutation synchronisé comportant un circuit formant étage final horizontal, séparé du réseau, dans des récepteurs de télévision pour la production d'un courant en dents de scie selon la revendication 1, caractérisé en ce que l'alimentation du circuit de réglage (2) s'effectue, pendant la phase de démarrage, par l'intermédiaire d'un circuit de démarrage (7) et, au régime stable, par l'intermédiaire d'un enroulement $n_5$ qui est couplé selon un couplage serré à l'enroulement primaire $n_1$ et est relié galvaniquement au côté réseau.

3. Elément de réseau de commutation synchronisé comportant un circuit formant étage final horizontal, séparé du réseau, dans des récepteurs de télévision pour la production d'un courant en dents de scie selon la revendication 1 ou 2, caractérisé en ce qu'une résistance de référence (6) est montée en série avec l'interrupteur de réglage (3) et avec l'enroulement primaire $n_1$ et que la tension, qui chute aux bornes de cette résistance de référence (6) est appliquée au circuit de réglage (2).

4. Elément de réseau de commutation synchronisé comportant un circuit formant étage final horizontal, séparé du réseau, dans des récepteurs de télévision pour l'introduction d'un courant en dents de scie selon une ou plusieurs des revendications précédentes, caractérisé en ce qu'il est prévu un autre enroulement $n_6$, au moyen duquel la haute tension est obtenue pour le tube image et qui est séparé galvaniquement du côté réseau.

Reg.1868

$U_{Hochsp.}$

$U_{Foc.}$

Kleinsignal

NF

$U_N$

12

13

14

1

2

3

4

5

6

7

8

9

10

$n_1$  $n_2$  $n_3$  $n_4$  $n_5$  $n_6$